# EUROPEAN PATENT APPLICATION

(11) **EP 4 501 529 A1**
(43) Date of publication of application: **05.02.2025**
(21) Application number: 23780087.5
(22) Date of filing: 23.03.2023
(51) Int. Cl.: B23P 15/28, B23B 27/18, B23K 20/00, B23K 20/02, B23P 15/30

(54) **TIP MANUFACTURING DEVICE, TIP MANUFACTURING METHOD, CUTTING TOOL TIP, AND PEDESTAL**

(30) Priority: 28.03.2022 JP 2022052351
(71) Applicant: Origin Company, Limited, Saitama-shi Saitama 338-0823 (JP); Focus Co., Ltd., Utsunomiya-shi, Tochigi 320-0806 (JP)
(72) Inventor: KADOYA, Yasuo, Saitama-shi, Saitama 338-0823 (JP); OSHINO, Yuki, Saitama-shi, Saitama 338-0823 (JP); NISHIMURA, Hironobu, Saitama-shi, Saitama 338-0823 (JP); MIZUTANI, Naozumi, Saitama-shi Saitama 338-0823 (JP); HAYASHI, Toshihiko, Saitama-shi Saitama 338-0823 (JP); MATSUSHITA, Shigeru, Utsunomiya-shi, Tochigi 320-0806 (JP)
(74) Representative: Wallin, Nicholas James
(86) International application number: PCT/JP2023/011633
(87) International publication number: WO 2023/190077

(57) **Abstract**

This tip manufacturing device, in which a cutting edge is joined to a pedestal, comprises: a first electrode in contact with the pedestal; a second electrode in contact with the cutting edge; a current generator for generating a current flowing between the two electrodes; and a movement device for moving the pedestal in contact with the first electrode and/or the cutting edge in contact with the second electrode in a movement direction. The tip manufacturing method includes: supplying a pedestal; supplying a cutting edge to a recess in the pedestal; pressing the cutting edge against the pedestal; and causing a current to flow across the cutting edge and the pedestal with the pressure being applied. The cutting tool tip is provided with a cutting edge and a pedestal that are joined directly to one another. In the pedestal: the recess has a first surface and a second surface that are adjacent to one another at a prescribed angle; each surface has a protrusion that projects from a contacting surface with which the cutting edge comes into contact; and when the cutting edge is being attached to the recess, the protrusion is softened and is directly joined to the cutting edge.

## Description

### Technical Field

The present disclosure relates to an insert manufacturing apparatus, a method of manufacturing an insert, an insert for a cutting tool, and a base, and particularly relates to an insert manufacturing apparatus, a method of manufacturing an insert, an insert for a cutting tool, and a base for a cutting edge exchange insert in an indexable cutting tool.

### Background Art

Cutting tools used for cutting include an indexable cutting tool capable of exchanging an insert having a cutting edge. An example of the insert that is replaceably attached to the indexable cutting tool, which is called as throw away insert, is configured by joining a cutting edge made of an ultra-high hardness sintered body, such as cubic boron nitride (CBN) or a diamond sintered body, to a main body or base made of cemented carbide. In such an insert, a cutting edge is typically joined to a main body by brazing (see, for example, Japanese Patent Application Laid-Open Publication No. 2000-326111).

### SUMMARY OF INVENTION

Regarding a typical insert in which a cutting edge is joined to a main body by brazing, there are following problems, for example. To manufacture a typical insert, it is required for a worker skilled in brazing to braze the cutting edge to a main body. In addition, it takes a considerable time to braze the cutting edge to the main body. In addition, it is difficult to automate brazing work of the cutting edge to the main body.

In view of the above-described problems, the present disclosure relates to an insert manufacturing apparatus, a method of manufacturing an insert, an insert for a cutting tool, and a base, which are capable of joining a cutting edge to a base or main body without using brazing.

An insert manufacturing apparatus according to a first aspect of the present disclosure, the insert being used in a cutting tool and having a cutting edge joined to a base, the apparatus includes: a first electrode to contact with the base; a second electrode to contact with the cutting edge; a current generator that generates an electric current flowing between the first electrode and the second electrode via the base and the cutting edge; and a moving device that relatively moves at least one of the base in contact with the first electrode or the cutting edge in contact with the second electrode, in a moving direction, wherein the base is formed with a depression to which the cutting edge is to be attached, the depression has a first surface and a second surface adjacent to each other at a predetermined angle, and the first surface and the second surface are surfaces with which the cutting edge comes into contact when the cutting edge is attached to the depression, and wherein the moving direction is a direction in which the cutting edge is brought close to the first surface and the second surface.

With this configuration, an electric current can flow between the first electrode and the second electrode when the cutting edge is pressed toward the first surface and the second surface, which enable the cutting edge and the base to be directly joined. Here, the direct joining is joining performed by welding such as pressure welding between the cutting edge and the base, and is joining performed without interposing an intermediate material such as an adhesive layer, and includes, for example, solid phase joining but does not include brazing.

As for an insert manufacturing apparatus according to a second aspect of the present disclosure, in the insert manufacturing apparatus according to the first aspect of the present disclosure, the moving direction may be a direction in which the first electrode or the second electrode moves when at least one of the first electrode or the second electrode is moved so as to reduce a distance between the first electrode and the second electrode, and the first electrode may have a placement surface on which the base is placed, and the placement surface may be formed such that the first surface and the second surface are inclined with respect to the moving direction when the base is placed. In other words, an insert manufacturing apparatus according to a second aspect of the present disclosure may be an insert manufacturing apparatus, the insert being used in a cutting tool and having a cutting edge joined to a base, the apparatus including: a first electrode to contact with the base; a second electrode to contact with the cutting edge; a current generator that generates an electric current flowing between the first electrode and the second electrode via the base and the cutting edge; and a moving device that moves at least one of the first electrode or the second electrode in a moving direction, in which the moving direction may be a direction in which the first electrode or the second electrode moves when at least one of the first electrode or the second electrode is moved so as to reduce a distance between the first electrode and the second electrode, the base may be formed with a depression to which the cutting edge is to be attached, the depression may have a first surface and a second surface adjacent to each other at a predetermined angle, the first surface and the second surface may be surfaces with which the cutting edge is in contact when the cutting edge is attached to the depression, the first electrode may have a placement surface on which the base is placed, and the placement surface may be formed so that the first surface and the second surface are inclined with respect to the moving direction when the base is placed.

With this configuration, since the placement surface is formed such that the first surface and the second surface are inclined with respect to the moving direction when the base is placed, the cutting edge is pressed toward the first surface and the second surface when the first electrode and/or the second electrode are moved in the moving direction.

As for an insert manufacturing apparatus according to a third aspect of the present disclosure, in the insert manufacturing apparatus according to the second aspect of the present disclosure, the second electrode may have a first contact part and a second contact part which are to contact with the cutting edge, the first contact part may be a part to contact with a surface of the cutting edge on a back side of a surface of the cutting edge in contact with the first surface, and the second contact part may be a part to contact with a surface of the cutting edge on a back side of a surface of the cutting edge in contact with the second surface.

With this configuration, the cutting edge can be appropriately pressed against the base in which the first surface and the second surface are inclined with respect to the moving direction.

As for an insert manufacturing apparatus according to a fourth aspect of the present disclosure, in the insert manufacturing apparatus according to the first aspect of the present disclosure, the moving device may include a first moving device that brings the cutting edge closer to the first surface, and a second moving device that brings the cutting edge closer to the second surface.

With this configuration, it is possible to directly join the first surface and the second surface without inclining the base and the cutting edge.

As for an insert manufacturing apparatus according to a fifth aspect of the present disclosure, in the insert manufacturing apparatus according to any one of the first to fourth aspects of the present disclosure, the apparatus may include a controller that controls the moving device and the current generator so as to cause an electric current to flow between the first electrode and the second electrode via the base and the cutting edge while relatively moving at least one of the base in contact with the first electrode or the cutting edge in contact with the second electrode, in the moving direction, to pressurize the cutting edge against the base.

With this configuration, joining the cutting edge to the base can be automated.

A method of manufacturing an insert according to a sixth aspect of the present disclosure is a method of manufacturing an insert used in a cutting tool and having a cutting edge joined to a base, the method including: a step of supplying the base in which the depression to which the cutting edge is to be attached is formed; a step of supplying the cutting edge to the depression; a step of pressurizing the cutting edge against the base; and a step of causing an electric current to flow through the cutting edge and the base while the cutting edge is pressurized against the base. The method of manufacturing an insert according to the present aspect may be performed using the insert manufacturing apparatus according to any one of the first to fifth aspects of the present disclosure, and may include: a step of supplying the base to the first electrode, wherein the depression is formed in the base and the cutting edge is to be attached to the depression; a step of supplying the cutting edge to the depression; a step of bringing the second electrode into contact with the cutting edge that has been supplied to the depression; a step of pressurizing the cutting edge against the base by the moving device; and a step of causing an electric current generated by the current generator to flow through the cutting edge and the base while the cutting edge is pressurized against the base.

With this configuration, an electric current flows through the cutting edge and the base during pressurization, which enable the cutting edge to be directly joined to the base.

As for a method of manufacturing an insert according to a seventh aspect of the present disclosure, in the method of manufacturing an insert according to the sixth aspect of the present disclosure, the depression may have the first surface and the second surface adjacent to each other at a predetermined angle, and the first surface and the second surface may be surfaces with which the cutting edge is in contact when the cutting edge is attached to the depression, and in the step of pressurizing the cutting edge against the base, component forces of force applied to bring the cutting edge and the base close to each other may act on the first surface and the second surface.

With this configuration, it is possible to appropriately and directly join the cutting edge and the base on each of the first surface and the second surface.

An insert for a cutting tool according to an eighth aspect of the present disclosure includes: a cutting edge that cuts a cutting object at a time of cutting; and a base, a depression being formed in the base and the cutting edge being attached to the depression, wherein the cutting edge attached to the depression and the base are directly joined to each other.

With this configuration, since the cutting edge and the base are directly joined, it is possible to increase the joining strength more than brazing.

As for an insert for a cutting tool according to a ninth aspect of the present disclosure, in the insert for a cutting tool according to the eighth aspect of the present disclosure, the depression may have a first surface and a second surface adjacent to each other at a predetermined angle, the first surface may have a first groove formed in a part adjacent to a part directly joined to the cutting edge. Further, as for an insert for a cutting tool according to the present aspect, the second surface may have a second groove formed in a part adjacent to a part directly joined to the cutting edge.

With this configuration, burrs generated when the cutting edge and the base are directly joined can be accommodated in the first groove and the second groove, thereby reducing a decrease in dimensional accuracy and a decrease in joining strength.

As for an insert for a cutting tool according to a tenth aspect of the present disclosure, in the insert for a cutting tool according to the ninth aspect of the present disclosure, the first surface may have first contact surfaces with which the cutting edge is in contact, and the first contact surfaces are provided at least in a part close to the second surface and a part on a side opposite to the part close to the second surface, between the part close to the second surface and the part opposite thereto being the first groove and the part directly joined to the cutting edge, and the second surface may have second contact surfaces with which the cutting edge is in contact, and the second contact surfaces are provided at least in a part close to the first surface and a part on a side opposite to the part close to the first surface, between the part close to the first surface and the part opposite thereto being the second groove and the part directly joined to the cutting edge.

With this configuration, when the insert for a cutting tool is used for cutting, a cutting load can be applied to the first contact surface and the second contact surface.

A base according to an eleventh aspect of the present disclosure is a base configuring an insert for use in a cutting tool by attaching a cutting edge, and in the base: a depression to which the cutting edge is to be attached is formed, the depression has a first surface and a second surface adjacent to each other at a predetermined angle, the first surface has a first contact surface and a first protrusion protruding from the first contact surface, the first contact surface being a surface in contact with the cutting edge when the cutting edge is attached to the depression, the second surface has a second contact surface and a second protrusion protruding from the second contact surface, the second contact surface being a surface in contact with the cutting edge when the cutting edge is attached to the depression, and the first protrusion and the second protrusion are portions that are softened and directly joined to the cutting edge when the cutting edge is attached to the depression.

With this configuration, it is possible to provide a base suitable for direct joining.

As for a base according to a twelfth aspect of the present disclosure, in the base according to the eleventh aspect of the present disclosure, a plurality of first contact surfaces may be provided at least in a part close to the second surface and a part opposite to the part close to the second surface over the first protrusion, a plurality of second contact surfaces may be provided at least in a part close to the first surface and a part opposite to the part close to the first surface over the second protrusion, first grooves may be formed between the first protrusion and each of the first contact surfaces, and second grooves may be formed between the second protrusion and each of the second contact surfaces.

With this configuration, the burr generated when the cutting edge is directly joined to the base can be accommodated in the first grooves and the second grooves, thereby reducing a decrease in dimensional accuracy and a decrease in joining strength when the cutting edge is directly joined to the base.

As for a base according to a thirteenth aspect of the present disclosure, in the base according to the twelfth aspect of the present disclosure, at least a contour of a side of the first protrusion from a top of the first protrusion toward the first groove on a side close to the second surface may be inclined, and an inclination angle of the side of the first protrusion on the side close to the second surface may be from 25 degrees to 65 degrees, and at least a contour of a side of the second protrusion from a top of the second protrusion toward the second groove on a side close to the first surface may be inclined, and an inclination angle of the side of the second protrusion on the side close to the first surface may be from 25 degrees to 65 degrees.

With this configuration, when the cutting edge is directly joined to the base, the contact area between the inclined side of the first protrusion and the inclined side of the second protrusion and the cutting edge can be increased to secure the joining strength.

### Advantageous Effects of Invention

According to the present disclosure, it is possible to directly join a cutting edge to a base.

### BRIEF DESCRIPTION OF DRAWINGS

Fig. 1 is an exploded perspective view of an insert according to an embodiment.
Fig. 2 is a partial cross-sectional view of a base around a depression.
Fig. 3 is a partial cross-sectional view of an insert around a cutting edge.
Fig. 4 is a cross-sectional view illustrating a schematic configuration of an insert manufacturing apparatus according to an embodiment.
Fig. 5 is a perspective view illustrating around electrodes of the insert manufacturing apparatus according to an embodiment.
Fig. 6 is a flowchart illustrating a procedure of manufacturing the insert according to an embodiment.
Fig. 7 is a cross-sectional view illustrating a schematic configuration of an insert manufacturing apparatus according to another embodiment.
Fig. 8 is a partial cross-sectional view of a base around a depression according to a modified embodiment.

### DESCRIPTION OF EMBODIMENTS

This application is based on the Patent Application No. 2022-052351 filed on March 28, 2022 in Japan, the contents of which are hereby incorporated in its entirety by reference into the present application, as part thereof.

The present invention will become more fully understood from the detailed description given hereinbelow. Further range of application of the present invention will become clearer from the detailed description given hereinbelow. However, the detailed description and the specific embodiment are illustrated of desired embodiments of the present invention and are described only for the purpose of explanation. Various changes and modifications will be apparent to those ordinary skilled in the art on the basis of the detailed description.

The applicant has no intention to give to public any disclosed embodiment. Among the disclosed changes and modifications, those which may not literally fall within the scope of the patent claims constitute, therefore, a part of the present invention in the sense of doctrine of equivalents.

Description will hereinafter be made of embodiments with reference to the drawings. The same or corresponding members are denoted with the same reference numerals in all the drawings, and their descriptions are not repeated.

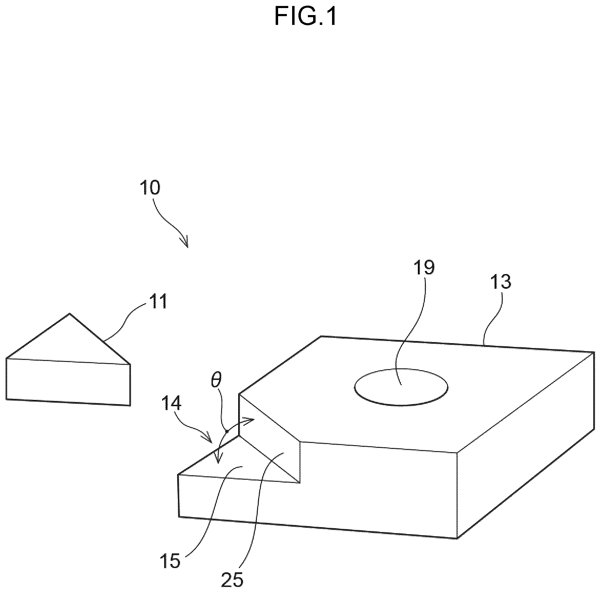

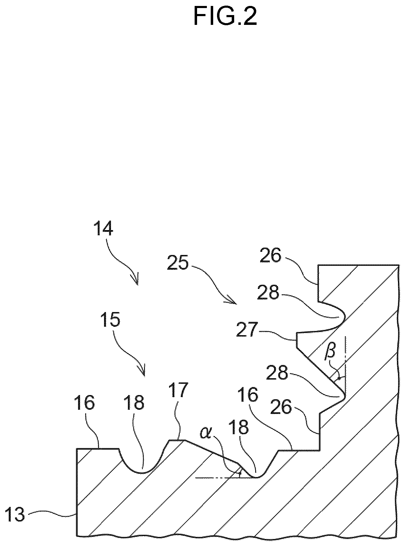

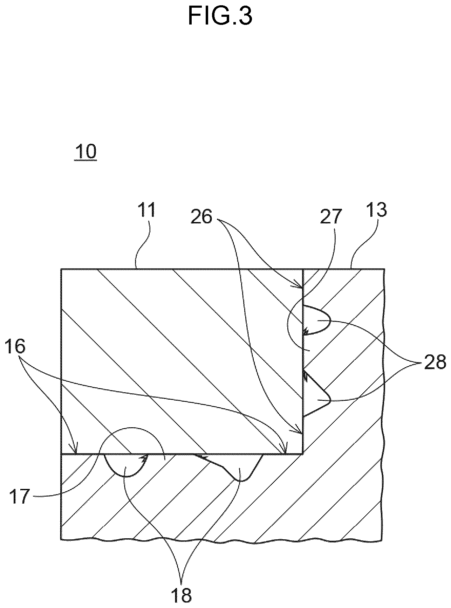

First, with reference to Figs. 1 to 3, an insert 10 for a cutting tool, which is hereinafter simply referred to as an "insert 10", according to an embodiment will be described. Fig. 1 is an exploded perspective view of the insert 10. The insert 10 includes a cutting edge 11 and a base 13. The insert 10 is configured by joining a cutting edge 11 to a depression 14 formed in the base 13. Fig. 2 is a partial cross-sectional view of the base 13 around the depression 14. Fig. 3 is a partial cross-sectional view of the insert 10 around the cutting edge 11. The insert 10 is typically a component detachably attached to a shank of a bite (not illustrated) used in a lathe that performs cutting, and is sometimes referred to as a throw away insert. The cutting edge 11 of the insert 10 is a portion that comes into contact with a cutting object, or specifically a workpiece, at the time of cutting. A through hole 19 is formed in the base 13. The through hole 19 is a hole for allowing a fastening member, such as a bolt, to pass when the insert 10 is attached to the shank of the bite (not illustrated). The insert 10 features direct joining between the cutting edge 11 and the base 13. Here, the direct joining is joining performed by welding such as pressure welding between the cutting edge 11 and the base 13, and is joining performed without interposing an intermediate material (for example, a brazing material) such as an adhesive layer. Therefore, the direct joining includes solid phase joining in which the member to be joined is joined as a solid phase without forming a liquid phase, but does not include brazing. Hereinafter, the configuration of the insert 10 will be described in more detail.

The cutting edge 11 is made of a material harder than the cutting object in order to bite into the cutting object at the time of cutting. A material having appropriate toughness is used for the cutting edge 11. The cutting edge 11 is made of a material that is favorably joined directly to the base 13. Based on these viewpoints, a cemented carbide is typically used as the material of the cutting edge 11. The cemented carbide is typically mainly an alloy in which cobalt is contained in tungsten carbide, or WC-Co. In the present embodiment, the cutting edge 11 contains a large amount of cobalt from the viewpoint of good direct joining to the base 13. The content of cobalt is, for example, from 0.5wt% to 20wt% ((A/(A+B)) ×100, and the same applies hereinafter). The cutting edge 11 is formed in a triangular prism shape in the present embodiment. However, the external shape of the cutting edge 11 can be a suitable shape according to circumstances, such as use, and for example, may be formed in a columnar shape having a shape of a rhombus, a rectangle, a polygon such as a pentagon or a hexagon in plan view. In the cutting edge 11, a bottom surface and a side surface among surfaces forming a triangular prism shape are surfaces joined to the base 13.

The base 13 is made of a material that is hard and has toughness in order to withstand the load during cutting. Further, as the base 13, a material that allows the cutting edge 11 to be favorably joined directly is used. Based on these viewpoints, a cemented carbide is typically used as the material of the base 13. The material of the base 13 may be the same as that of the cutting edge 11, or the content of cobalt in the material of the base 13 may be larger than that of the cutting edge 11. For example, the content of cobalt may be from 0.5wt% to 20wt%. In the present embodiment, the base 13 is broadly rectangular in plan view and formed in a quadrangular prism shape as a whole, and one corner of eight corners of a quadrangular prism as a basic shape is cut out to form the depression 14. The depression 14 is formed by being cut out in a triangular prism shape congruent with the cutting edge 11 so that the cutting edge 11 is fitted. The portion of the base 13 in which the depression 14 is formed has a first surface 15 and a second surface 25. The first surface 15 is a surface to which one of bases of the triangular prism-shaped cutting edge 11, or the bottom surface, is fitted, and has a triangular shape. The second surface 25 is a surface to which one of lateral faces of the triangular prism-shaped cutting edge 11, or side surface, is fitted, and has a rectangular shape. The first surface 15 and the second surface 25 are adjacent to each other at a predetermined angle θ. The predetermined angle θ may be determined so as to be not adversely affected by stress acting on the insert 10 at the time of cutting and in consideration of, for example, ease of joining when the cutting edge 11 is joined to the base 13. The predetermined angle θ is set to 90 degrees in the present embodiment. However, the predetermined angle θ may be an acute angle, such as 89 degrees, 88 degrees, 87 degrees, 85 degrees, 80 degrees, or 75 degrees, or may be an obtuse angle, such as 91 degrees, 92 degrees, 93 degrees, 95 degrees, 100 degrees, or 105 degrees, depending on the situation.

With reference to Fig. 2, which is a partial cross-sectional view, a more detailed configuration of the first surface 15 and the second surface 25 will be described. The partial cross-sectional view of Fig. 2 illustrates around the depression 14 in a cross section appearing when a straight line connecting diagonal corners of a rectangle of a base of a quadrangular prism is extended in a height direction of the quadrangular prism and cut in a base 13 having a quadrangular prism shape as a basic shape. As illustrated in the partial cross-sectional view of Fig. 2, each of the first surface 15 and the second surface 25 is not a flat surface but has unevenness. The unevenness is provided in consideration of suitable direct joining of the cutting edge 11. Focusing first on the first surface 15, the first contact surfaces 16 are provided at both ends in the partial cross section of Fig. 2. The first contact surfaces 16 are surfaces with which the cutting edge 11 comes into contact when the cutting edge 11 is joined to the base 13. The first contact surfaces 16 on both sides are flat surfaces existing in the same plane. Considering such characteristics, the first contact surfaces 16 are defined as a reference surface of the first surface 15. That is, when the distance and angle from the first surface 15 are measured, the first contact surfaces 16 are used as a reference.

Formed between the both first contact surfaces 16 is a first protrusion 17. The top or tip of the first protrusion 17 protrudes toward the depression 14 more than the first contact surfaces 16. This protruding portion of the first protrusion 17 is a portion directly joined to the cutting edge 11 by welding. Therefore, the extent to which the first protrusion 17 protrudes from the first contact surface 16 may be determined in consideration of the manner in which it is joined to the cutting edge 11, and may be, for example, from 0.1 mm to 0.3 mm or from 0.15 mm to 0.2 mm. The top or tip of the first protrusion 17 may be pointed or slightly flat. In a case in which the top or tip of the first protrusion 17 is slightly flat, a portion of a flat surface may be smaller in width than each first contact surface 16 in the cross section illustrated in Fig. 2, and may be about from 1/10 to 1/2, or about from 1/5 to 1/3 of the width of each first contact surface 16. By making the surface of the top or tip of the first protrusion 17 relatively small, it is possible to reduce an increase in pressing resistance when the cutting edge 11 is joined to the base 13. First grooves 18 are formed between the first protrusion 17 and each of the first contact surfaces 16. Each first groove 18 is a portion recessed to the opposite side of the depression 14 with respect to the first contact surfaces 16. The first grooves 18 make it possible to accommodate burrs generated by softening and deforming the protruding portion of the first protrusion 17 when the cutting edge 11 is joined. Therefore, it is sufficient that the first grooves 18 have a volume capable of accommodating the burr generated when the cutting edge 11 is joined.

The first protrusion 17 is inclined from the top or tip toward the first grooves 18 on both sides. In the present embodiment, the inclination of first protrusion 17 is gentler on an inner side, which is the side closer to second surface 25, and steeper on an outer side. In other words, an inclination angle α of the inner side, which is the side closer to the second surface 25, of the first protrusion 17 is smaller than the inclination angle of the outer side. Here, the inclination angle of the first protrusion 17 is an angle formed by a virtual straight line parallel to the first contact surfaces 16 at the bottom of the first protrusion 17 and the side surface of the first protrusion 17. In a case in which the side surface of the first protrusion 17 is not a straight line, the angle is an angle formed by a straight-line approximation connecting a top and a bottom of the side surface and the virtual straight line. The inclination angle α of the inner side, which is the side close to the second surface 25, may be from 25 degrees to 65 degrees, preferably from 30 degrees to 60 degrees, and may be from 40 degrees to 50 degrees or 45 degrees. In a case in which the inclination angle α is formed in this manner, when the cutting edge 11 is pressed toward the intersection line between the first surface 15 and the second surface 25 in order to join the cutting edge 11 to the base 13, the cutting edge 11 moves substantially along the inner side surface of the first protrusion 17. This configuration allows a contact area between the inner side surface of the first protrusion 17 and the cutting edge 11 to be increased, and the joining strength can be secured. Note that the inclination angle of the outer side surface of the first protrusion 17 may be an angle orthogonal to the first contact surfaces 16. An overview of the first surface 15 configured in this manner shows that the first protrusion 17 and the first grooves 18 are sandwiched between the first contact surfaces 16 at both ends. The first contact surfaces 16, the first protrusion 17, and the first grooves 18 extend in a direction orthogonal to the cross section illustrated in Fig. 2, or in a direction perpendicular to the paper surface.

Formed on the second surface 25 are second contact surfaces 26, a second protrusion 27, and second grooves 28. The second contact surfaces 26, the second protrusion 27, and the second grooves 28 correspond to the first contact surfaces 16, the first protrusion 17, and the first grooves 18, respectively, and perform the same functions as corresponding ones. To be sure, the second contact surfaces 26 are provided at both ends of the second surface 25 in the partial cross section of Fig. 2. The second contact surfaces 26 serve as a reference surface of the second surface 25. Therefore, the predetermined angle θ between the first surface 15 and the second surface 25 corresponds to an angle formed by the first contact surfaces 16 and the second contact surfaces 26 in more detail. A portion of the second protrusion 27 protruding from the second contact surface 26 is a portion directly joined to the cutting edge 11 by welding. The extent to which the second protrusion 27 protrudes from the second contact surface 26 can be typically appropriately determined from the range in which the first protrusion 17 protrudes, or specifically from 0.1 mm to 0.3 mm, and may be the same as or different from the first protrusion 17. Similarly to the top or tip of first protrusion 17, the top or tip of second protrusion 27 may also be formed with a sharp or slightly flat, and the shape thereof is similar to the top or tip of first protrusion 17. In the present embodiment, the inclination of second protrusion 27 is gentler on the inner side, which is the side closer to first surface 15, and steeper on the outer side. In other words, the inclination angle β of the inner side, which is the side closer to the first surface 15, of the second protrusion 27 is smaller than the inclination angle of the outer side. Here, the inclination angle of the second protrusion 27 is an angle formed by a virtual straight line parallel to the second contact surfaces 26 at the bottom of the second protrusion 27 and the side surface of the second protrusion 27. In a case in which the side surface of the second protrusion 27 is not a straight line, the angle is an angle formed by a straight-line approximation connecting a top and a bottom of the side surface and a virtual straight line. The same condition as the inclination angle α of the inner side of the first protrusion 17 can be applied to the inclination angle β of the inner side, which is the side close to the first surface 15, and the same function and effect are obtained. Note that the inclination angle β may be the same as or different from the inclination angle α. The inclination angle of the outer side surface of the second protrusion 27 may be an angle orthogonal to the second contact surfaces 26. An overview of the second surface 25 configured in this manner shows that the second protrusion 27 and the second grooves 28 are sandwiched between the second contact surfaces 26 at both ends. The second contact surfaces 26, the second protrusion 27, and the second grooves 28 extend in a direction orthogonal to the cross section illustrated in Fig. 2, or in a direction perpendicular to the paper surface. The insert 10 is configured by joining the cutting edge 11 to the depression 14 in the base 13, which has been described above.

The partial cross-sectional view of the insert 10 illustrated in Fig. 3 represents the same cross section as Fig. 2. As illustrated in Fig. 3, also in the insert 10, the first grooves 18 and the second grooves 28 of the base 13 appear. In the first protrusion 17, a portion protruding from the first contact surface 16 plastically flows and is directly joined to the cutting edge 11. In the second protrusion 27, a portion protruding from the second contact surface 26 plastically flows and is directly joined to the cutting edge 11. A part where each of the first protrusion 17 and the second protrusion 27 is directly joined to the cutting edge 11 is typically solid-phase joined. The plastically flowed excess of the first protrusion 17 is accommodated in the first grooves 18 as a burr. The plastically flowed excess of the second protrusion 27 is accommodated in the second grooves 28 as a burr. Since the burr is accommodated in the first grooves 18 and the second grooves 28, it is possible to reduce a decrease in dimensional accuracy of the insert 10 and a decrease in joining strength between the cutting edge 11 and the base 13. In the present embodiment of the insert 10, the first contact surfaces 16 and the second contact surfaces 26 are in contact with the cutting edge 11, but are not directly joined to the cutting edge 11. Since the cutting edge 11 is in contact with the first contact surfaces 16 and the second contact surfaces 26, a load generated during cutting can be received by the first contact surfaces 16 and the second contact surfaces 26. The insert 10 configured as described above can be manufactured in the following manner.

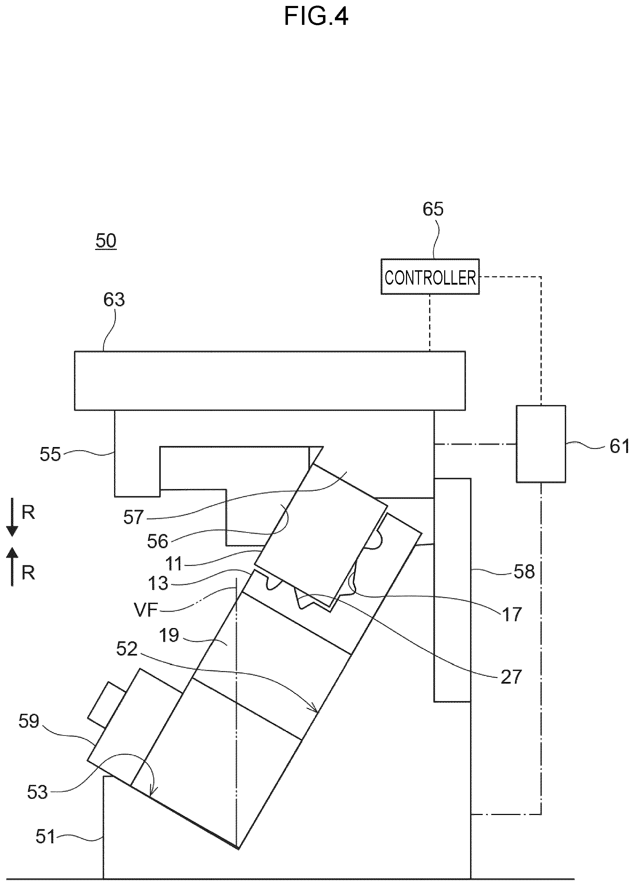

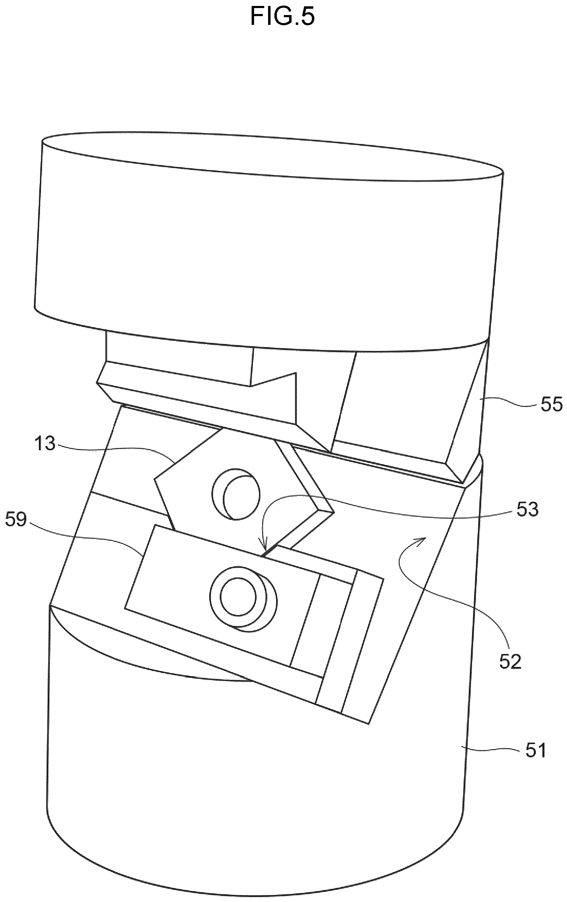

Fig. 4 is a cross-sectional view illustrating a schematic configuration of an insert manufacturing apparatus 50 according to an embodiment. Fig. 5 is a perspective view around electrodes of the insert manufacturing apparatus 50. In the present embodiment, the insert manufacturing apparatus 50 is an apparatus that performs resistance welding. The insert manufacturing apparatus 50 includes a first electrode 51, which is hereinafter referred to as a "lower electrode 51", a second electrode 55, which is hereinafter referred to as an "upper electrode 55", a power supply 61, a moving device 63, and a controller 65. In the present embodiment, the insert manufacturing apparatus 50 has a specification in which the upper electrode 55 is disposed vertically above the lower electrode 51 and used. Fig. 4 illustrates a cross section in which a cut surface extends in the vertical direction. Fig. 5 mainly illustrates the lower electrode 51, the upper electrode 55, and surroundings thereof, and omits the power supply 61, the moving device 63, and the controller 65. In the following description, when the insert 10, the cutting edge 11, and the base 13 are referred to, Figs. 1 to 3 are referred to accordingly.

The lower electrode 51 is an electrode with which the base 13 is brought into contact. The lower electrode 51 is made of a material through which an electric current easily flows, and is typically made of metal. In the present embodiment, the lower electrode 51 typically has an appearance in which a part on which the base 13 is placed is cut out on a member having a columnar basic shape. The lower electrode 51 has placement surfaces 52 and 53 formed inside a part cut out on the columnar basic shape. One placement surface 52 is a surface with which a surface of the base 13 where the through hole 19 is formed, which is hereinafter referred to as a "bottom surface", is in contact. When the lower electrode 51 is installed in the orientation in use, the placement surface 52 is neither horizontal nor vertical, but is inclined with respect to a virtual vertical plane VF. In the present embodiment, the placement surface 52 is inclined by about 30 degrees with respect to the virtual vertical plane VF, but this inclination may be an angle other than 30 degrees, such as from 25 degrees to 35 degrees, or 45 degrees. The other placement surface 53 is a surface with which a surface of the base 13 intersecting the bottom surface of the base 13, which is hereinafter referred to as a "side surface", is in contact. The placement surface 53 is inclined at an angle at which a side surface of the base 13 is in contact when the bottom surface of the base 13 is placed on the placement surface 52. In the present embodiment, since the bottom surface and the side surface of the base 13 are orthogonal to each other, the placement surface 53 is orthogonal to the placement surface 52. When the base 13 is placed on the placement surfaces 52 and 53, the base 13 is placed such that the depression 14 is located at the uppermost part, and the corner of the bottom surface located at the diagonal of the depression 14 is located at the lowest part. Therefore, the placement surface 53 is formed with two surfaces extending in a V shape when viewed from the front, or specifically from the left in the paper surface of Fig. 4, although not illustrated in Fig. 4.

The upper electrode 55 is an electrode with which the cutting edge 11 is brought into contact. The upper electrode 55 is made of a material through which an electric current easily flows, and is typically made of metal. In the present embodiment, the upper electrode 55 typically has an appearance in which a part into which the cutting edge 11 is fitted is cut out on a member having a columnar basic shape. The upper electrode 55 has a first contact part 56, which is hereinafter referred to as "first contact part 56", and a second contact part 57, which is hereinafter referred to as "second contact part 57", inside a part cut out on the columnar basic shape. The first contact part 56 is a part with which a surface of the cutting edge 11 is in contact. The surface of the cutting edge 11 in contact with the first contact part 56 is a back side surface of the surface of the cutting edge 11 in contact with the first surface 15 of the base 13. In the present embodiment, a part of the first contact part 56 with which the cutting edge 11 comes into contact is formed flat. The second contact part 57 is also a part with which a surface of the cutting edge 11 is in contact. The surface of the cutting edge 11 in contact with the second contact part 57 is a back side surface of the surface of the cutting edge 11 in contact with the second surface 25 of the base 13. In the present embodiment, the part of the second contact part 57 with which the cutting edge 11 is in contact is also formed flat. Further, in the present embodiment, an angle formed by the flat surface of the first contact part 56 in contact with the cutting edge 11 and the flat surface of the second contact part 57 in contact with the cutting edge 11 is 90 degrees. The angle formed by the both flat surfaces may be appropriately changed so as to match the shape of the cutting edge 11 in contact therewith. The upper electrode 55 may be formed by combining a block having the first contact part 56 and a block having the second contact part 57 as separate bodies, or may be integrally formed. In a case in which the block having the first contact part 56 and the block having the second contact part 57 are provided separately, one of them may be made of a material having no conductivity.

In the present embodiment, a guide 58 is provided across the lower electrode 51 and the upper electrode 55. The guide 58 is for preventing the lower electrode 51 and/or the upper electrode 55, when moving in a moving direction R, from moving in a direction intersecting the moving direction R. In the present embodiment, the moving direction R is a direction in which the lower electrode 51 or the upper electrode 55 moves when lower electrode 51 and/or upper electrode 55 is moved so that a distance between the lower electrode 51 and the upper electrode 55 is reduced. In the present embodiment, the guide 58 is fixed to a side surface of the lower electrode 51, and is slidable with respect to the upper electrode 55. In the present embodiment, the lower electrode 51 is provided with a fixture 59. The fixture 59 fixes the base 13 placed on the placement surfaces 52 and 53 to the lower electrode 51 by sandwiching the base 13 between the lower electrode 51 and the fixture 59. The fixture 59 is typically configured to be fixable to the lower electrode 51 with a bolt.

The power supply 61 is a device that supplies an electric current to the lower electrode 51 and the upper electrode 55. The power supply 61 is electrically connected to the lower electrode 51 and the upper electrode 55. The power supply 61 is configured to generate an electric current that flows between the lower electrode 51 and the upper electrode 55 via the base 13 and the cutting edge 11 sandwiched between the lower electrode 51 and the upper electrode 55, and corresponds to a current generator. The power supply 61 is typically configured to generate a pulsed direct current. The power supply 61 includes a power supply unit, a capacitor, a transformer, and a switch component, which are not shown in the figure. The power supply unit boosts and rectifies alternating current (AC) power received from an AC power supply such as a commercial AC power supply or an AC generator. The capacitor stores and discharges electric energy. The transformer converts an electric current supplied from the power supply unit and the capacitor into a large electric current. The switch component is typically a semiconductor component such as a switching element provided on the upstream side of the transformer. The power supply 61 is configured to be able to instantaneously discharge the energy charged in the capacitor. Therefore, in the joining using the power supply 61, a large electric current can be obtained in a short time, and joining with less thermal influence can be performed. In the power supply 61, a relatively small capacity of the input power supply, or AC power supply, is sufficient. The power supply 61 is not limited to a capacitor type using a capacitor, and may be an inverter type or another type. The power supply 61 is configured to be able to appropriately set the magnitude of the electric current to be supplied to the lower electrode 51 and the upper electrode 55.

The moving device 63 is a device that moves the lower electrode 51 and/or the upper electrode 55 in the moving direction R. In the present embodiment, the moving device 63 can move the base 13 and/or the cutting edge 11 in the moving direction R by moving the lower electrode 51 and/or the upper electrode 55 in the moving direction R. In the present embodiment, the moving direction R is set to the vertical direction. Since the placement surfaces 52 and 53 of the lower electrode 51 are inclined with respect to the virtual vertical plane VF as described above, the placement surfaces 52 and 53 are also inclined with respect to the moving direction R. In the present embodiment, the moving device 63 is configured to support upper electrode 55 and enable upper electrode 55 to be moved up and down. The moving device 63 may be configured to be able to move the block holding the upper electrode 55 by fluid pressure, or typically air pressure or hydraulic pressure, for example. With this configuration, the upper electrode 55 and the lower electrode 51 can be relatively moved in the moving direction R. In the present embodiment, the lower electrode 51 is placed on a stationary table. However, depending on the device configuration, the upper electrode 55 may be fixed and the moving device may be configured to move the lower electrode 51, or may be configured to move both the lower electrode 51 and the upper electrode 55.

The controller 65 is a device that controls the operation of the insert manufacturing apparatus 50. The controller 65 is connected to the power supply 61 in a wired or wireless manner, and is configured to be able to control whether or not an electric current is supplied to the lower electrode 51 and the upper electrode 55 and the magnitude of the electric current to be supplied. The controller 61 is connected to the moving device 63 in a wired or wireless manner, and is configured to control up and down movement of the upper electrode 55. In addition, the controller 65 stores a computer program for executing a method of manufacturing the insert 10 described later.

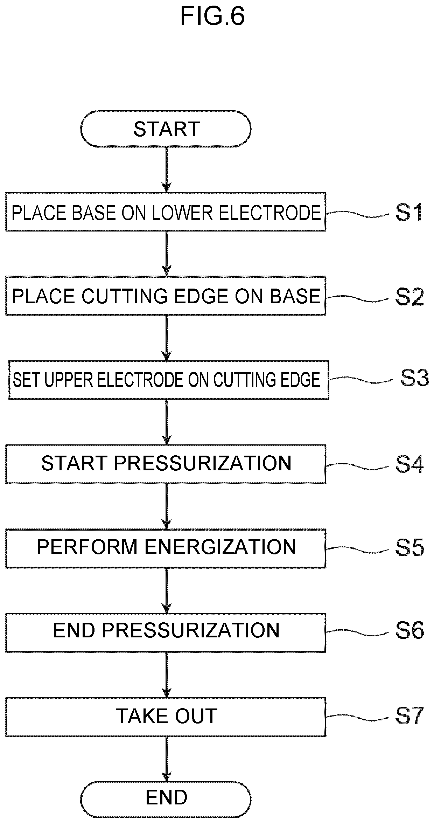

Next, with reference to Fig. 6, a method of manufacturing the insert 10 will be described. Fig. 6 is a flowchart illustrating a procedure of manufacturing the insert 10. A method of manufacturing the insert 10 described below is performed by the insert manufacturing apparatus 50 described above. That is, the following description also serves to explain the operation of the insert manufacturing apparatus 50. In the following description of the method of manufacturing the insert 10, when the configurations of the insert 10, the cutting edge 11, the base 13, and the insert manufacturing apparatus 50 are referred to, Figs. 1 to 5 are referred to accordingly.

Prior to the start of manufacturing of the insert 10, the lower electrode 51 is disposed on a work table. When the manufacturing of the insert 10 is started, the base 13 is first placed on the lower electrode 51 (S1). The placement of the base 13 on the lower electrode 51 is by placing the base 13 on the placement surfaces 52 and 53 such that the depression 14 of the base 13 is positioned in front of the upper part, or in the upper part on the side farther from the placement surface 52. It should be noted that the placement is one aspect of supply. Further, the base 13 may be fixed to the lower electrode 51 by attaching the fixture 59 on the lower electrode 51 after the base 13 is mounted on the placement surfaces 52 and 53. In the base 13 placed in the lower electrode 51, both of the first surface 15 and the second surface 25 of the depression 14 are neither horizontal nor vertical, and an intersection line between the first surface 15 and the second surface 25 is located at a lowermost part of the depression 14. The inclination of the inner side of each of the first protrusion 17 and the second protrusion 27 is gentler than that of the outer side. Therefore, when the base 13 is placed on the lower electrode 51, the inclination of the inner side is closer to parallel to the moving direction R than that of the outer side, or an angle between the inner side and the moving direction R is smaller.

Next, the cutting edge 11 is placed in the depression 14 of the base 13 placed on the lower electrode 51 (S2). At this time, since the cutting edge 11 is not going to be brazed to the base 13 in the present manufacturing method, it is not necessary to perform a pre-treatment such as applying flux to the joint surface. In addition, since the depression 14 of the base 13 placed in the lower electrode 51 has the intersection line between the first surface 15 and the second surface 25 positioned at the lowermost part of the depression 14, the cutting edge 11 can be arranged in the depression 14 simply by placing the cutting edge 11 in the depression 14. In the base 13, since the first protrusion 17 and the second protrusion 27 protrude from the first contact surface 16 and the second contact surface 26, respectively, the cutting edge 11 is mainly supported by the first protrusion 17 and the second protrusion 27. When the cutting edge 11 is placed in the depression 14, the upper electrode 55 is set on the cutting edge 11 (S3). At this time, the upper electrode 55 is set such that the first contact part 56 and the second contact part 57 of the upper electrode 55 are in contact with the cutting edge 11. The moving device 63 is disposed on the upper electrode 55.

When the base 13 and the cutting edge 11 are placed between the lower electrode 51 and the upper electrode 55, the moving device 63 is moved in the moving direction R, thereby starting the pressurization of the cutting edge 11 with respect to the base 13 (S4). In the present embodiment, while the moving direction R is the vertical direction, the flat surfaces of the first surface 15 and the second surface 25 of the depression 14 and the first contact part 56 and the second contact part 57 of the upper electrode 55 are inclined with respect to the horizontal plane and the vertical plane. Hence, a force, or specifically pressurizing force, applied from the upper electrode 55 to the cutting edge 11 in the vertical direction, or moving direction R, acts on the first surface 15 and the second surface 25 as a component force perpendicular to the first surface 15 and the second surface 25. Therefore, it is possible to pressurize the cutting edge 11 toward both the first surface 15 and the second surface 25 simply by moving the upper electrode 55 in the moving direction R. In the present embodiment, the control of the movement of the moving device 63 is performed by the controller 65 based on a command, or input, from an operator of the apparatus. When such pressurization is performed, the controller 65 appropriately turns on the switch of the power supply 61 to which the lower electrode 51 and the upper electrode 55 are connected, and causes an electric current to flow between the lower electrode 51 and the upper electrode 55 via the base 13 and the cutting edge 11 (energization step: S5). Applying pressure to the respective distal ends of the first protrusion 17 and the second protrusion 27 by the cutting edge 11 and causing an electric current to flow bring about a concentration of the pressurizing force and the electric current between the cutting edge 11 and the first protrusion 17 and between the cutting edge 11 and the second protrusion 27. The part where the pressurizing force and the electric current are concentrated is, in the present embodiment, by Joule heat, not melted but softened, and plastically deformed. In the present embodiment, since the pressurizing force concentrates on the first protrusion 17 and the second protrusion 27 having an area smaller than that of the cutting edge 11, the first protrusion 17 and the second protrusion 27 are further softened and plastically deformed. The contact parts of the first protrusion 17 and the second protrusion 27 with the cutting edge 11 gradually expand while being plastically deformed, resulting in diffusion of atoms on the joint surface to achieve joining. As described above, in the present embodiment, the contact parts between the cutting edge 11 and the base 13 are subjected to solid phase joining. Note that the energization is typically performed by command from the controller 65 continuously or intermittently flowing one or a plurality of pulsed currents depending on the situation.

During the process in which the cutting edge 11 and the base 13 are pressurized and energized accordingly, when the cutting edge 11 comes into contact with the entire first contact surface 16 and the entire second contact surface 26, the controller 65 controls the moving device 63 to stop moving in the moving direction R. As a result, the pressurization of the cutting edge 11 with respect to the base 13 ends (S6). Note that the steps from the step of starting the pressurization of the cutting edge 11 with respect to the base 13 (S4) to the step of ending the pressurization of the cutting edge 11 with respect to the base 13 (S6) correspond to the pressurization step. The softened and plastically deformed first protrusion 17 and second protrusion 27 flow into the first grooves 18 and the second grooves 28, respectively, and are accommodated by the time the pressurization of the cutting edge 11 with respect to the base 13 is completed. When the pressurization step is completed, the upper electrode 55 is retracted, and the manufactured insert 10 is taken out (S7). In this manner, the insert 10 is manufactured. In a case in which the manufacturing of the insert 10 is continued after the manufacturing of one insert 10 is completed, the above-described procedure may be repeated.

As described above, according to the present embodiment, the first protrusion 17 and the second protrusion 27 are provided on the first surface 15 and the second surface 25 of the depression 14 of the base 13, respectively. Therefore, by applying an electric current while pressurizing the first protrusion 17 and the second protrusion 27 with the cutting edge 11, pressure welding can be performed, and the cutting edge 11 and the base 13 can be directly joined without brazing. In addition, since the placement surfaces 52 and 53 of the lower electrode 51 are inclined with respect to the moving direction R, the cutting edge 11 can be pressurized toward the first surface 15 and the second surface 25 simply by pressurizing the cutting edge 11 and the base 13 in the moving direction R. In addition, since the upper electrode 55 has the first contact part 56 and the second contact part 57, the cutting edge 11 can be appropriately pressed toward the first surface 15 and the second surface 25. In addition, since the pressurization step and the energization step are controlled by the controller 65, some of the manufacturing steps of the insert 10 can be automated. In addition, since the cutting edge 11 is in contact with the first contact surfaces 16 and the second contact surfaces 26 of the base 13, the insert 10 manufactured by being directly joined can receive the cutting load at the first contact surfaces 16 and the second contact surfaces 26 during the cutting. In addition, the manufacture of the insert 10 by directly joining the cutting edge 11 and the base 13 can be performed by using the insert manufacturing apparatus 50, thereby avoiding an extended manufacturing cycle without requiring a skilled technique such as brazing.

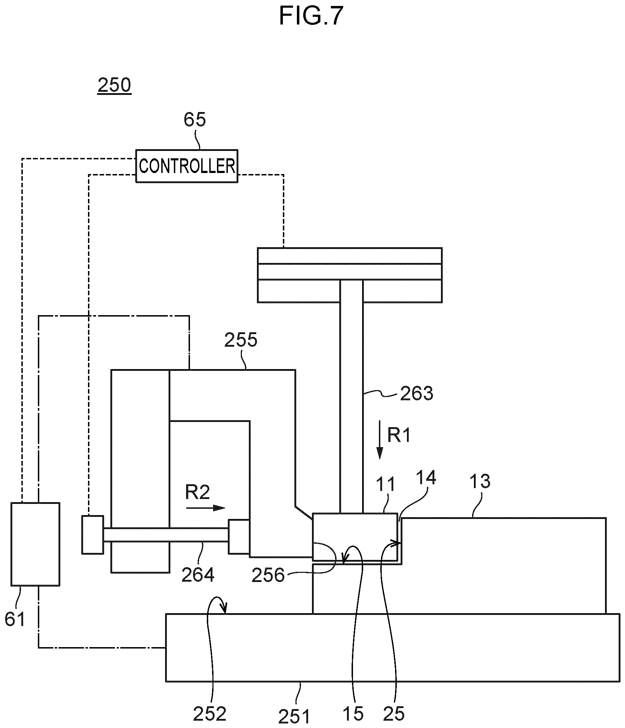

Next, with reference to Fig. 7, an insert manufacturing apparatus 250 according to another embodiment will be described. Fig. 7 is a cross-sectional view illustrating a schematic configuration of the insert manufacturing apparatus 250. The insert manufacturing apparatus 250 includes a lower electrode 251, an upper electrode 255, a power supply 61, a first moving device 263, a second moving device 264, and a controller 65. The insert manufacturing apparatus 250 is greatly different from the insert manufacturing apparatus 50 (see Fig. 4) in that the apparatus 250 includes two moving devices, one of which is the first moving device 263, which moves the cutting edge 11 toward the first surface 15, and the other is the second moving device 264, which moves the cutting edge 11 toward the second surface 25. In addition, the shapes of the lower electrode 251 and the upper electrode 255 of the insert manufacturing apparatus 250 are different from those of the lower electrode 51 and the upper electrode 55 of the insert manufacturing apparatus 50 (see Fig. 4). Meanwhile, the power supply 61 and the controller 65 of the insert manufacturing apparatus 250 are similar to those of the insert manufacturing apparatus 50 (see Fig. 4).

The lower electrode 251 has, on an upper surface thereof, a placement surface 252 with which the base 13 is in contact. The placement surface 252 is typically formed in a size that encompasses the planar shape of the base 13. The placement surface 252 is typically formed flat. The lower electrode 251 is provided such that the placement surface 252 is horizontal. In the present embodiment, the upper electrode 255 is disposed at a position facing the second surface 25 of the base 13 placed on the lower electrode 251. In other words, the upper electrode 255 is disposed at a position where the cutting edge 11 is sandwiched between the upper electrode 255 and the second surface 25. In the present embodiment, the upper electrode 255 extends from a position facing the second surface 25 toward an opposite side of the lower electrode 251 beyond a surface of the base 13 opposite to lower electrode 251. In the upper electrode 255, a contact part 256 in contact with the cutting edge 11 is formed on a surface facing the second surface 25. The surface of the contact part 256 is formed to have a V-shaped cross section so as to be in contact with two side surfaces other than the side surface facing the second surface 25 among the three side surfaces of the triangular prism of the cutting edge 11. The surface of the upper electrode 255 on the opposite side, or back side, of the contact part 256 is typically formed flat parallel to the second surface 25 in the state where the base 13 is placed on the lower electrode 251.

The first moving device 263 is a device that moves the cutting edge 11 toward the first surface 15 of the depression 14 of the base 13. Although an air cylinder is used as the first moving device 263 in the present embodiment, a working fluid is not limited to air, and may be hydraulic pressure, or the cutting edge 11 may be moved by electric power other than the fluid pressure cylinder. The first moving device 263 is configured to allow the rod of the air cylinder to approach and move away from the first surface 15 in a direction perpendicular to the first surface 15. Therefore, a direction that is perpendicular to the first surface 15, or a perpendicular line of the first surface 15, and is toward the first surface 15 is a moving direction of the first moving device 263, which is hereinafter referred to as a "first moving direction R1". In a case in which the first moving device 263 is disposed such that the distal end of the rod of the air cylinder is in contact with the triangular centroid of the end surface of the cutting edge 11, the cutting edge 11 can be stably pressed against the first surface 15, which is preferable. The first moving device 263 is configured to operate in accordance with a command from the controller 65.

The second moving device 264 is a device that moves the cutting edge 11 toward the second surface 25 of the depression 14 of the base 13. Similarly to the first moving device 263, the second moving device 264 uses an air cylinder in the present embodiment, but may be a hydraulic cylinder or may be operated by electric power. The second moving device 264 is configured to allow the rod of the air cylinder to approach and move away from the second surface 25 in a direction perpendicular to the second surface 25. Therefore, a direction that is perpendicular to the second surface 25, or a perpendicular line of the second surface, and is toward the second surface 25 is a moving direction of the second moving device 264, which is hereinafter referred to as a "second moving direction R2". In the present embodiment, the second moving direction R2 is perpendicular to the first moving direction R1. The second moving device 264 is preferably disposed such that the distal end of the rod of the air cylinder is in contact with the upper electrode 255 on a virtual straight line extending in the second moving direction R2 through the center of the figure of the second surface 25 in a case in which the base 13 is placed on the lower electrode 251. This arrangement enables the cutting edge 11 to be stably pressed against the second surface 25. The second moving device 264 is configured to operate in accordance with a command from the controller 65.

As described above, the controller 65 is configured similarly to the controller 65 of the insert manufacturing apparatus 50 (see Fig. 4), but the following points are noted. In the insert manufacturing apparatus 250, the movement in the first moving direction R1 by the first moving device 263 and the movement in the second moving direction R2 by the second moving device 264 are simultaneously performed at the timing when the moving device 63 is operated in the insert manufacturing apparatus 50 (see Fig. 4).

The procedure of manufacturing the insert 10 (see Fig. 3) by the insert manufacturing apparatus 250 configured as described above is broadly similar to the case of using the insert manufacturing apparatus 50 (see Fig. 4). Therefore, the flowchart of Fig. 6 can also be applied to the case of using the insert manufacturing apparatus 250. Then, differences in details from the case of using the insert manufacturing apparatus 50 (see Fig. 4) will be described below. In a case in which the insert manufacturing apparatus 250 is used, in the step of placing the base 13 on the lower electrode 251 (S1), the base 13 is placed on the placement surface 252 such that the depression 14 comes close to the first moving device 263 and the second moving device 264. At this time, the first surface 15 of the depression 14 of the base 13 extends horizontally, and the second surface 25 extends vertically. In the present embodiment, since the base 13 is placed on the horizontal placement surface 252, the base 13 can be easily placed. In the step of placing the cutting edge 11 in the depression 14 of the base 13 (S2), since the first surface 15 is positioned at the lowermost part in the depression 14 by the arrangement of the base 13 described above, the cutting edge 11 is placed on the first surface 15. In the step of setting the upper electrode 255 (S3), the contact part 256 of the upper electrode 255 is brought into contact with two side surfaces of the triangular prism shape of the cutting edge 11. By bringing the upper electrode 255 into contact with the side surface of the cutting edge 11, even in a case in which the upper end surface of the cutting edge 11 is made of a substance that is difficult to be energized, an electric current can flow from the side surface to the cutting edge 11.

In the step of starting pressurization (S4), the controller 65 simultaneously performs the movement in the first moving direction R1 by the first moving device 263 and the movement in the second moving direction R2 by the second moving device 264. These movements cause a pressing force in the first moving direction R1 to act on the cutting edge 11 from the first moving device 263 and a pressing force in the second moving direction R2 to act on the cutting edge 11 from the second moving device 264 via the upper electrode 255. In the energization step (S5), a case in which an electric current flows between the lower electrode 251 and the upper electrode 255 via the base 13 and the cutting edge 11, or specifically an electric current flows from the upper electrode 255 to the lower electrode 251, will be described as follows. The electric current from the upper electrode 255 enters the cutting edge 11 through two side surfaces of the triangular prism shape of the cutting edge 11. The electric current that has entered the cutting edge 11 enters the base 13 through both the first surface 15 and the second surface 25. The electric current that has entered the base 13 reaches the lower electrode 251 through the placement surface 252. This electric current flow causes the cutting edge 11, which is pressed in the first moving direction R1 and the second moving direction R2, to be directly joined to both the first surface 15 and the second surface 25 of the base 13. In the step of ending the pressurization (S6), the controller 65 simultaneously releases the pressing by the first moving device 263 in the first moving direction R1 and the pressing by the second moving device 264 in the second moving direction R2. The manufactured insert 10 is taken out (S7) similarly to the case of using the insert manufacturing apparatus 50 (see Fig. 4).

As described above, in a case in which the insert 10 is manufactured using the insert manufacturing apparatus 250, the base 13 and the cutting edge 11 do not have to be arranged at an angle, and the first surface 15 and the second surface 25 of the depression 14 of the base 13 can be in a horizontal plane and a vertical plane. Therefore, its moving directions conform to the operation direction of the general-purpose robot, and the materials, or specifically the base 13 and the cutting edge 11, can be smoothly taken in and out of the insert manufacturing apparatus 250, thereby promoting mass production.

In the above description of the insert manufacturing apparatus 250, the upper electrode 255 is in contact with the side surface of the triangular prism shape of the cutting edge 11 and pressed by the second moving device 264. However, the upper electrode 255 may be configured to be in contact with the upper end surface of the triangular prism shape of the cutting edge 11 and pressed by the first moving device 263.

In the above description, the cemented carbide forming the cutting edge 11 is mainly an alloy in which cobalt is contained in tungsten carbide, or WC-Co, but an iron-based metal such as iron or nickel may be used instead of or together with cobalt. In addition, although cemented carbide is used as the material of the cutting edge 11, the cutting edge 11 may be partially made of, for example, cubic boron nitride (CBN) or polycrystalline diamond sintered body (PCD) in addition to a case where the entire cutting edge is made of the same type of cemented carbide.

In the above description, the part where the cutting edge 11 and the base 13 are directly joined is solid phase joining. However, depending on the characteristics of the base 13 (for example, material or shape), the base may be melted and joined.

In the above description, the protrusions 17 and 27 on which the pressurizing force concentrates when the cutting edge 11 and the base 13 are joined are formed on the base 13, but may be formed on the cutting edge 11 instead of or together with the base 13. Further, although the grooves 18 and 28 into which the protrusions 17 and 27 softened and plastically deformed flow are formed in the base 13, the grooves may be formed on the cutting edge 11 instead of or together with the base 13.

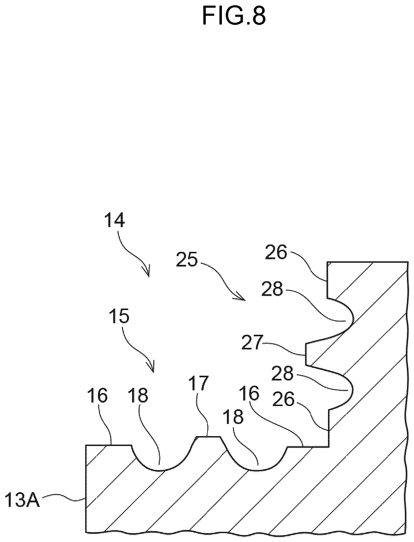

In the above description, the inclinations of the first protrusion 17 and the second protrusion 27 are gentler on the inner side and steeper on the outer side. However, as illustrated in a base 13A according to a modified embodiment shown in Fig. 8, the inclinations of the inner side and the outer side may be the same degree of inclination.

In the description that has been made so far, the insert manufacturing apparatus, the method of manufacturing insert, the insert for cutting tool, and the base according to the present embodiments have been described with reference to each figure as the example. However, the configurations, structures, numbers, arrangements, shapes, materials, and the like of each of the sections are not limited to the above specific example. The components that are appropriately and selectively adopted by the person skilled in the art are included in the scope of the present invention as long as the gist of the present invention is included.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. An insert manufacturing apparatus for manufacturing an insert, the insert being used in a cutting tool and having a cutting edge joined to a base, the apparatus comprising:
a first electrode to contact with the base;
a second electrode to contact with the cutting edge;
a current generator that generates an electric current flowing between the first electrode and the second electrode via the base and the cutting edge; and
a moving device that relatively moves at least one of the base in contact with the first electrode or the cutting edge in contact with the second electrode, in a moving direction,
wherein the base is formed with a depression to which the cutting edge is to be attached, the depression has a first surface and a second surface adjacent to each other at a predetermined angle, and the first surface and the second surface are surfaces with which the cutting edge comes into contact when the cutting edge is attached to the depression, and
wherein the moving direction is a direction in which the cutting edge is brought close to the first surface and the second surface.

2. The insert manufacturing apparatus according to claim 1, wherein:
the moving direction is a direction in which the first electrode or the second electrode moves when at least one of the first electrode or the second electrode is moved so as to reduce a distance between the first electrode and the second electrode, and
the first electrode has a placement surface on which the base is placed, and the placement surface is formed such that the first surface and the second surface are inclined with respect to the moving direction when the base is placed.

3. The insert manufacturing apparatus according to claim 2, wherein:
the second electrode has a first contact part and a second contact part which are to contact with the cutting edge,
the first contact part is a part to contact with a surface of the cutting edge on a back side of a surface of the cutting edge in contact with the first surface, and
the second contact part is a part to contact with a surface of the cutting edge on a back side of a surface of the cutting edge in contact with the second surface.

4. The insert manufacturing apparatus according to claim 1, wherein the moving device includes a first moving device that brings the cutting edge closer to the first surface, and a second moving device that brings the cutting edge closer to the second surface.

5. The insert manufacturing apparatus according to any one of claims 1 to 4, comprising a controller that controls the moving device and the current generator so as to cause an electric current to flow between the first electrode and the second electrode via the base and the cutting edge while relatively moving at least one of the base in contact with the first electrode or the cutting edge in contact with the second electrode, in the moving direction, to pressurize the cutting edge against the base.

6. A method of manufacturing an insert, the insert being used in a cutting tool and having a cutting edge joined to a base, the method using the insert manufacturing apparatus according to any one of claims 1 to 5, the method comprising:
a step of supplying the base to the first electrode, wherein the depression is formed in the base and the cutting edge is to be attached to the depression;
a step of supplying the cutting edge to the depression;
a step of bringing the second electrode into contact with the cutting edge that has been supplied to the depression;
a step of pressurizing the cutting edge against the base by the moving device; and
a step of causing an electric current generated by the current generator to flow through the cutting edge and the base while the cutting edge is pressurized against the base.

7. The method of manufacturing an insert according to claim 6, wherein:
the depression has the first surface and the second surface adjacent to each other at a predetermined angle, and the first surface and the second surface are surfaces with which the cutting edge is in contact when the cutting edge is attached to the depression, and
in the step of pressurizing the cutting edge against the base, component forces of force applied to bring the cutting edge and the base close to each other act on the first surface and the second surface.

8. An insert for a cutting tool, the insert comprising:
a cutting edge that cuts a cutting object at a time of cutting; and
a base, a depression being formed in the base and the cutting edge being attached to the depression,
wherein the cutting edge, attached to the depression, and the base are directly joined to each other,
wherein the depression has a first surface and a second surface adjacent to each other at a predetermined angle, and
wherein the first surface has a first groove formed in a part adjacent to a part directly joined to the cutting edge.

9. The insert for a cutting tool according to claim 8, wherein the second surface has a second groove formed in a part adjacent to a part directly joined to the cutting edge.

10. The insert for a cutting tool according to claim 9, wherein:
the first surface has first contact surfaces with which the cutting edge is in contact, and the first contact surfaces are provided at least in a part close to the second surface and a part on a side opposite to the part close to the second surface, between the part close to the second surface and the part opposite thereto being the first groove and the part directly joined to the cutting edge, and
the second surface has second contact surfaces with which the cutting edge is in contact, and the second contact surfaces are provided at least in a part close to the first surface and a part on a side opposite to the part close to the first surface, between the part close to the first surface and the part opposite thereto being the second groove and the part directly joined to the cutting edge.

11. A base configuring an insert by attaching a cutting edge, the insert being for use in a cutting tool, wherein:
a depression to which the cutting edge is to be attached is formed in the base,
the depression has a first surface and a second surface adjacent to each other at a predetermined angle,
the first surface has a first contact surface and a first protrusion protruding from the first contact surface, the first contact surface being a surface in contact with the cutting edge when the cutting edge is attached to the depression,
the second surface has a second contact surface and a second protrusion protruding from the second contact surface, the second contact surface being a surface in contact with the cutting edge when the cutting edge is attached to the depression, and
the first protrusion and the second protrusion are portions that are softened and directly joined to the cutting edge when the cutting edge is attached to the depression.

12. The base according to claim 11, wherein:
a plurality of first contact surfaces are provided at least in a part close to the second surface and a part opposite to the part close to the second surface over the first protrusion,
a plurality of second contact surfaces are provided at least in a part close to the first surface and a part opposite to the part close to the first surface over the second protrusion,
first grooves are formed between the first protrusion and each of the first contact surfaces, and
second grooves are formed between the second protrusion and each of the second contact surfaces.

13. The base according to claim 12, wherein:
at least a contour of a side of the first protrusion from a top of the first protrusion toward the first groove on a side close to the second surface is inclined, and an inclination angle of the side of the first protrusion on the side close to the second surface is from 25 degrees to 65 degrees, and
at least a contour of a side of the second protrusion from a top of the second protrusion toward the second groove on a side close to the first surface is inclined, and an inclination angle of the side of the second protrusion on the side close to the first surface is from 25 degrees to 65 degrees.
